# EUROPEAN PATENT APPLICATION

(11) **EP 1 811 781 A1**
(43) Date of publication of application: **25.07.2007**
(21) Application number: 07100525.0
(22) Date of filing: 15.01.2007
(51) Int. Cl.: H04N 7/173

(54) **Method for the management of the access for a single-cable signal distribution system, and system thereof**

(30) Priority: 18.01.2006 IT TO20060030
(71) Applicant: Fracarro Radioindustrie S.p.A., 31033 Castelfranco Veneto (TV) (IT)
(72) Inventor: RIGHETTO, LUIGI FRACARRO RADIOINDUSTRIE S.P.A, 31055, QUINTO DI TREVISO (TV) (IT)
(74) Representative: Dini, Roberto

(57) **Abstract**

The invention relates to a method for the management of the access for a single-cable signal distribution system (10), said distribution system (10) comprising a head-end unit (1), at least one user terminal (5) and a control channel (9) in order to transmit messages from said at least one user terminal (5) to said head-end unit (1) through said control channel (9), wherein said head-end unit (1) sends a transmission signal (Busy_Signal) which can be received by said at least one user terminal (5) and wherein, before transmitting a message to said head-end unit (1), said user terminal (5) tunes itself to said transmission signal (Busy_Signal) and, based on a piece of information associated with said transmission signal (Busy_Signal), either transmits or not said message.

## Description

The present invention relates to a method and system for the management of the access for a single-cable signal distribution system.

In particular, the present invention relates to a method and system for the management of the access for a single-cable system used for distributing satellite and/or terrestrial signals, in particular DVB (Digital Video Broadcasting) type, wherein messages are transmitted to a head-end unit by a plurality of user terminals.

As known, SMATV (Satellite Master Antenna Television) and MATV (Master Antenna Television) distribution systems are widely used as solutions for distributing DVB (Digital Video Broadcasting) both satellite and terrestrial signals to user terminals located within the same building. Said signal distribution systems are described in the DVB-SMATV Specification entitled "DVB Satellite Master Antenna Television (SMATV) distribution systems", identified by number EN 300 473.

The distribution systems proposed in said Specification, however, are not fully adapted to be used in small and medium-size joint systems, due to the constraints imposed by the limited bandwidth available. In fact, the solutions proposed in the EN 300 473 Specification either require a large amount of cable harnesses or limit the services available to a user of the distribution system.

A signal distribution system conceived specifically for small and medium-size joint systems is described in the ETSI TS 101 964 Specification entitled "Digital Video Broadcasting (DVB); Control Channel for SMATV/MATV distribution systems; Baseline Specification", published in August 2001.

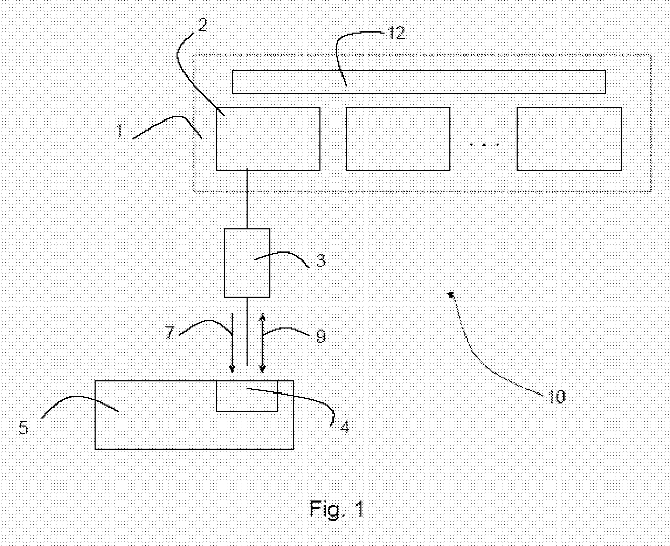

The ETSI TS 101 964 Specification provides a basic layout as shown in Fig. 1, which illustrates a head-end unit 1 connected to a plurality of user terminals 5 of a distribution system 10 through a network 3.

Head-end unit 1, installed in a building, receives terrestrial and/or satellite signals, and then processes them in order to transmit them over the network 3.

Each user terminal 5 of the distribution system is assigned its own individual one-way radiofrequency (RF) channel 7 on network 3 for single-cable distribution of audio, video and data DVB services, which are selected remotely by user terminal 5 by controlling head-end unit 1.

Said control takes place by means of instruction messages exchanged between user terminal 5 and head-end unit 1 over a narrow-band control channel 9.

Control channel 9 allows each user of distribution system 10 to choose to receive specific digital services as if he/she were using an autonomous system.

Although conceived mainly for SMATV type distribution systems used for distributing DVB satellite services, control channel 9 may also be applied to MATV type distribution systems currently used for broadcasting terrestrial services through VHF/UHF waves and microwaves.

According to the ETSI TS 101 964 Specification, control channel 9 is used for two physical layers: the first physical layer, which utilizes a 22kHz bus as a control channel 9, is appropriate for small SMATV/MATV distribution systems using DC-coupled elements; the second physical layer, which utilizes a radiofrequency bus in a frequency band over 10 MHz as a control channel 9, is appropriate for SMATV/MATV distribution systems using inductive components.

Both of said physical layers have to be able to manage a possible collision between messages transmitted simultaneously over control channel 9 by two or more user terminals 5; this occurs, in particular, when at least two users of distribution system 10 are "zapping" simultaneously, i.e. when they transmit a service request to head-end unit 1 at the same time.

As for the first physical layer, based on the utilization of a 22kHz bus, the ETSI TS 101 964 Specification recommends a limited number of users (twelve on a single cable) in order to provide an acceptable "zapping" quality, i.e. without excessive delays between the user's request and the actual system's response.

Moreover, in order to avoid collisions between messages coming from two or more user terminals 5, the ETSI TS 101 964 Specification provides for an access control scheme capable of ensuring a maximum access time of 1.5 seconds in the event that all users of distribution system 10 are "zapping" simultaneously.

The system for managing the message collision of the first physical layer has two limits: user terminal 5 must be able to receive messages based on a 22kHz bus, and network 3 must allow messages to be propagated over a 22kHz bus from a user terminal 5 to another. Both of these requirements are difficult to meet, because there is no DC coupling among the users of the same distribution network, and also because most set-top boxes available on the market can only generate DiSEqC 1.0 messages.

As for the second physical layer, based on the utilization of a radiofrequency bus in a frequency range over 10 MHz, the ETSI TS 101 964 Specification provides for using an "Aloha" type scheme which exploits the resources of the control channel randomly through time division. In short, when a user terminal 5 must transmit a message, the transmission takes place when it is the turn of user terminal 5 to use the transmission time window, without actually checking whether control channel 9 is available or busy. Although in this case the ETSI TS 101 964 Specification states a 97% probability of success for forty user terminals 5 connected to the distribution system, this percentage decreases quickly for a number of connections of user terminals 5 being higher than forty. In practice, the system for the management of the access of the second physical layer simply provides for the retransmission of the message to head-end unit 1.

The object of the present invention is to provide a method for the management of the access for a single-cable signal distribution system, and a system thereof, which improves the management of the access of a plurality of user terminals connected to a head-end unit through a control channel.

It is a further object of the present invention to provide a method for the management of the access for a single-cable signal distribution system, and a system thereof, wherein no additional hardware functionalities are required in the user terminals for implementing said method.

These and other objects of the invention are achieved by the method and the system as claimed in the appended claims.

The system according to the present invention utilizes a logical device arranged on the side of the "head-end" unit, which sends a transmission signal to the user terminal in order to indicate whether the control channel is available or busy, thus allowing or denying access to the network.

The transmission signal is transmitted over the network and can be received by all user terminals without requiring any additional hardware functionalities either in the network or in the user terminals, since it is generated in the original reception band of the user terminal. No changes are required in the distribution network either, the components of which generally do not allow direct-voltage signals to pass through, because the proposed method utilizes the original operating bands of the elements which constitute the network.

The above objects will become apparent from the detailed description of the method and system according to the invention, with particular reference to the annexed figures, wherein:
- Fig. 1 shows a basic diagram of a single-cable signal distribution system;
- Fig. 2 shows a status diagram of an access management method for a single-cable distribution system according to the invention.

Referring now to Fig. 1, it shows a basic diagram of a single-cable distribution system 10, which includes a head-end unit 1 connected to a plurality of user terminals 5 of the distribution system 10 through a network 3.

Head-end unit 1 comprises a plurality of modules 2, such as QPSK/QAM transmodulators, IF-IF converters and so on.

Each user terminal 5 of distribution system 10 is assigned its own individual one-way radiofrequency (RF) channel 7 on network 3 for single-cable distribution of audio, video and data DVB services, which are selected by user terminal 5 remotely by controlling head-end unit 1.

Said control takes place by means of instruction messages exchanged between an interface 4 of user terminal 5 and head-end unit 1 over a narrow-band control channel 9.

According to the invention, a logical device 12 associated with head-end unit 1 transmits a signal designated Busy_Signal, e.g. consisting of a single tone or a modulated signal, over network 3.

The signal Busy_Signal can be received by user terminal 5, since said signal is sent in the reception band of user terminal 5.

Logical device 12 is a device capable of realizing that a message is arriving over control channel 9 and of generating or activating the generation of the transmission signal Busy_Signal. For example, logical device 12 may be a 485 unit which receives messages sent over control channel 9 and which activates, of all modules connected to the 485 bus, that module which is capable of generating the transmission signal that can be received by user terminal 5.

Logical device 12 may be external to or built in head-end unit 1.

The transmission signal Busy_Signal has the function of indicating whether control channel 9 is available or busy. Through a suitable procedure which will be described in detail below, when a user terminal 5 must transmit a message to head-end unit 1, it first tunes itself to the transmission signal Busy_Signal and, if the latter indicates that control channel 9 is available, it then transmits the message; otherwise, user terminal 5 waits for control channel 9 to become available. Any collisions between messages coming simultaneously from two or more user terminals 5 are thus avoided.

The transmission signal Busy_Signal may be a simple tone, wherein the information about the "available" or "busy" status is determined by the tone power, or else a modulated signal, wherein said information is determined by the message carried by the modulated signal.

If the transmission signal Busy_Signal is a tone, user terminal 5 detects its presence by calculating the power in the transmission band of the tone itself. This method may lead to wrong detections, e.g. in the presence of spurious signals or signals interfering in the band of the signaling tone, which cannot be discerned through power calculation.

If the signal Busy_Signal is modulated, it provides user terminal 5 with either a first known sequence indicating that control channel 9 is available or a second known sequence indicating that control channel 9 is busy. This avoids any false interpretation of the transmission signal Busy_Signal by user terminal 5.

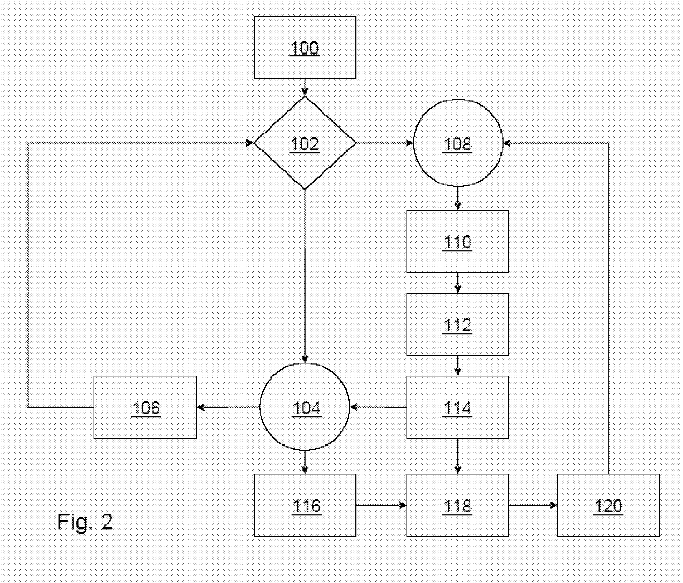

Referring now to Fig. 2, it shows a status diagram of a method for management of the access for a single-cable signal distribution system 10 according to the invention.

The procedure starts when any one of user terminals 5 belonging to distribution system 10 must transmit a message to head-end unit 1.

User terminal 5 tunes itself to the transmission signal Busy_Signal sent by head-end unit 1 (step 100).

If the signal Busy_Signal (step 102) is detected by user terminal 5 to be in the "busy" status, this means that control channel 9 has already been engaged (step 104) by another user terminal 5', which has already reserved control channel 9 in order to transmit a message or is already transmitting a message to head-end unit 1.

According to the procedure, an adequate period of time is then allowed to elapse (step 106), which depends on the length of the messages transmitted over control channel 9 and on the execution time of control operations, before a new verification is carried out in order to check whether the Busy_Signal (step 102) is still in the "busy" status or not.

If the signal Busy_Signal is in the "available" status (step 102, direction to the right), this means that control channel 9 is currently available (step 108).

User terminal 5 then transmits the message over the network 3, in particular over the control channel 9 (step 110).

Head-end unit 1 detects that control channel 9 is busy (step 112) and switches the signal Busy-Signal to the "busy" status (step 114), thereby indicating that control channel 9 is now busy (step 104), i.e. that a user terminal 5 is transmitting a message.

When user terminal 5 has completed the transmission of the message (step 116), head-end unit 1 detects that control channel 9 is available (step 118) and forces the signal Busy_Signal to switch to the "available" status (step 120), thereby indicating that control channel 9 is now available (step 108) and can receive another message from any user terminal 5.

When a user terminal 5 must transmit a new message, the procedure starts again from step 100.

The advantages of the present invention are apparent from the above description.

A first advantage of the present invention is the fact that, in order to implement the method according to the invention, it is not necessary to add any new hardware functionalities to the user terminal, since it is capable of receiving the transmission signal transmitted by the logical device of the head-end unit because said transmission signal is in the reception band already used by the user terminal for DVB services.

A second advantage of the present invention is that no changes must be made to the architecture of the signal distribution system, since it is sufficient to provide a logical device associated with the head-end unit to be able to implement the method according to the invention.

An additional advantage offered by the method according to the present invention is that the user does not have to carry out predetermined message re-transmissions, which would considerably increase the traffic over the control channel.

It is clear that the above description is provided by way of a non-limiting example, and that variations and changes are possible without departing from the scope of the invention.

For example, the time elapsing between successive analyses of the signal Busy_Signal by the user terminal 5 may be pseudorandom, in order to shorten access time.

## Claims

1. Method for the management of the access for a signal single-cable distribution system (10), said distribution system (10) comprising a head-end unit (1), at least one user terminal (5) and a control channel (9) in order to transmit messages from said at least one user terminal (5) to said head-end unit (1) through said control channel (9), said method being **characterized in that** said head-end unit (1) transmits a transmission signal (Busy_Signal) which can be received by said at least one user terminal (5) and that, before transmitting a message to said head-end unit (1), said user terminal (5) tunes itself to said transmission signal (Busy_Signal) and, based on a piece of information associated with said transmission signal, either transmits or not said message.

2. Method according to claim 1, **characterized in that** said transmission signal (Busy_Signal) is a single tone and said information is associated with the power of said single tone.

3. Method according to claim 2, **characterized in that**, if said at least one user terminal (5) detects the presence of said single tone by calculating its power in the transmission band of said single tone, then said control channel (9) is busy/available, and, when said at least one user terminal (5) does not detect the presence of said single tone, then said control channel (9) is available/busy.

4. Method according to claim 1, **characterized in that** said transmission signal (Busy_Signal) is a modulated signal.

5. Method according to claim 4, **characterized in that**, when said information associated with said transmission signal (Busy_Signal) comprises a first sequence known by said at least one user terminal (5), then said control channel (9) is busy, and that, when said information associated with said modulated signal comprises a second sequence known by said at least one user terminal (5), then said control channel (9) is available.

6. Method according to claim 3 or 5, **characterized in that**, when said control channel (9) is busy, said user terminal (5) waits for a period of time before carrying out said tuning again.

7. Method according to claim 6, **characterized in that** said period of time is pseudo-random.

8. Single-cable signal distribution system (10) comprising a head-end unit (1), at least one user terminal (5) and a control channel (9) in order to transmit messages from said at least one user terminal (5) to said head-end unit (1) through said control channel (9), **characterized in that** a device (12) associated with said head-end unit (1) is adapted to transmit a transmission signal (Busy_Signal) which can be received by said at least one user terminal (5).

9. Distribution system according to claim 8, **characterized in that** said transmission signal (Busy_Signal) is a single tone.

10. Distribution system according to claim 8, **characterized in that** said transmission signal (Busy_Signal) is a modulated signal.

11. Distribution system according to claim 8, **characterized in that** said device (12) is built in said head-end unit (1).

12. Distribution system according to claim 8, **characterized in that** said device (12) is external to said head-end unit (1).

13. System according to claim 8, **characterized in that** said device (12) is a 485 type unit.

14. System according to one or more of claims 8 to 13, **characterized in that** said control channel (9) is a 22kHz bus.

15. System according to any of claims 8 to 13, **characterized in that** said control channel (9) is a radio frequency bus operating in a frequency band over 10 MHz.
